# EUROPÄISCHE PATENTSCHRIFT

(11) **EP 1 339 985 B1**
(45) Veröffentlichungstag und Bekanntmachung des Hinweises auf die Patenterteilung: **23.08.2006**
(21) Anmeldenummer: 01997642.2
(22) Anmeldetag: 15.11.2001
(51) Int. Cl.: F03D 7/04, F03D 7/02, F03D 11/00

(54) **AZIMUTSTEUERUNG EINER WINDENERGIEANLAGE BEI STURM**
AZIMUTHAL CONTROL OF A WIND-ENERGY TURBINE DURING A STORM
COMMANDE AZIMUTALE POUR UNE EOLIENNE EN CAS DE TEMPETE

(30) Priorität: 23.11.2000 DE 10058076
(43) Veröffentlichungstag der Anmeldung: 03.09.2003
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2001/013202
(87) Internationale Veröffentlichungsnummer: WO 2002/042641

(56) Entgegenhaltungen:
- DE-A- 3 106 624
- DE-A- 19 532 409
- DE-A- 19 756 777
- DE-C- 19 717 059
- US-A- 4 213 734
- US-A- 4 966 525
- US-A- 5 278 773

## Beschreibung

Die vorliegende Erfindung betrifft ein Verfahren zur Steuerung einer Windenergieanlage bei sehr hohen Windgeschwindigkeiten, bei welchem eine erste Windgeschwindigkeit vorgegeben wird, bei welcher die Rotorblätter der Windenergieanlage in eine erste vorgegebene Einstellung gebracht werden.

Weiterhin betrifft die vorliegende Erfindung eine Windenergieanlage, insbesondere zur Ausführung eines solchen Steuerungsverfahrens, mit einem Azimutantrieb und mit einem Rotor mit wenigstens einem einzeln verstellbaren Rotorblatt.

Ein Verfahren zur Steuerung einer Windenergieanlage gemäß dem Oberbegriff des Hauptanspruches und eine Windenergieänlage gemäß dem Oberbegriff des Anspruches 10 ist z. B. aus der DE 195 32 409 bekannt. Weiterhin sind Verfahren zur Steuerung einer Windenergieanlage bei hohen Windgeschwindigkeiten aus Erich Hau, "Windkraftanlagen", Springer Verlag, 2. Auflage, 1996, S. 89f., 235 ff., sowie aus der DE 19 717 059 C1 bekannt.

Dieser bekannte Stand der Technik beschreibt überwiegend Maßnahmen, die ergriffen werden, um Windenergieanlagen bei sehr hohen Windgeschwindigkeiten vor Überlastung zu schützen. Dabei werden insbesondere mechanische Belastungen berücksichtigt, um eine Beschädigung der Anlage und /oder einzelner Komponenten zu vermeiden.

Als Standardmaßnahme wird regelmäßig das Einstellen der Rotorblätter in eine sogenannte Fahnenstellung beschrieben. Voraussetzung dafür ist allerdings, dass eine Möglichkeit besteht, den Anstellwinkel der Rotorblätter zu variieren - die sogenannte Pitch-Verstellung. Besteht eine solche Möglichkeit nicht, wird ein Strömungsabriss an den Rotorblättern herbeigeführt, um eine Entlastung der Windenergieanlage zu verwirklichen.

Bei diesen bekannten Verfahren ist es jedoch nachteilig, dass für weiter ansteigende Windgeschwindigkeiten oberhalb der ersten vorgegebenen Windgeschwindigkeit keine Maßnahmen angegeben werden, so dass nur darauf vertraut werden kann, dass die Anlagen ausreichend dimensioniert sind, um eine vollständige Zerstörung der Anlage und eine unausweichliche damit einhergehende akute Gefährdung der näheren Umgebung zu verhindern.

Aufgabe der vorliegenden Erfindung ist es daher, ein Verfahren zur Steuerung einer Windenergieanlage und eine Windenergieanlage zur Ausführung dieses Verfahrens anzugeben, die bei einer Extremwind-Situation in der Lage sind, die sich durch diesen Extremwind ergebenden mechanischen Belastungen der Windenergieanlage weitestmöglich zu verringern.

Zur Lösung dieser Aufgabe wird das Verfahren der eingangs genannten Art zur Steuerung einer Windenergieanlage mit den Merkmalen des Anspruchs 1 ausgebildet. Dadurch wird es möglich, die durch eine geeignete Verstellung der Rotorblätter getroffene Maßnahme zum Schutz der Windenergieanlage durch die Verstellung des Rotors in eine Position, in welcher der Windwiderstand besonders gering ist, zu unterstützen.

In einer bevorzugten Ausführungsform der Erfindung wird der Rotor dabei durch eine Verstellung der Azimutposition nach Lee gedreht, so dass er sich auf der windabgewandten Seite des Turmes der Windenergieanlage befindet.

In einer besonders bevorzugten Ausführungsform des Verfahrens wird neben der Azimutposition des Maschinenfiauses und damit der leeseitigen Ausrichtung des Rotors der Anstellwinkel der verstellbaren Rotorblätter so verstellt, das sie für den Wind einen geringstmöglichen Widerstand darstellen. Auf diese Weise kann die Belastung der gesamten Windenergieanlage deutlich verringert werden. Dazu werden die Rotorblätter wiederum in die Fahnenstellung gebracht.

Besonders bevorzugt kann das erfindungsgemäße Steuerungsverfahren derart ausgebildet sein, dass insbesondere die Belastungen an einem oder an mehreren Rotorblättern erfasst werden. Diese Erfassung kann z. B. durch Ermitteln der Windgeschwindigkeit am Rotorblatt, der Verformung des Rotorblattes und/oder andere geeignete Arten (Messung der Zug- und Druckkräfte am Rotorblatt oder der Rotornabe) erfolgen.

In einer bevorzugten Weiterbildung der Erfindung wird die Verdrillung von Kabeln, welche insbesondere vom Maschinenhaus in den Turm hinein verlaufen, oder vice versa, bei der Festlegung der Bewegungsrichtung zur Verstellung der Azimutposition des Maschinenhauses berücksichtigt. Auf diese Weise können vermeidbare Schäden tatsächlich vermieden werden. Die erste vorgegebene Windgeschwindigkeit in der Größenordnung von etwa 20 m/s wird auch überlicherweise als Abschaltgeschwindigkeit bzw. Grenzgeschwindigkeit bezeichnet. Bei dieser Geschwindigkeit bzw. einem Wert etwas darüber, zum Beispiel 25 m/s Windgeschwindigkeit schalten die meisten Windenergieanlagen ab, d.h. der gesamte Rotor wird abgebremst und es findet dann keine weitere Energieerzeugung statt.

In einer insbesondere bevorzugten Weiterbildung des Verfahrens werden die Azimutbremse und/oder die Rotorbremse gelöst, so dass der anströmende Wind den leeseitigen Rotor selbsttätig in.die Position mit dem geringsten Windwiderstand verstellt, wobei gleichzeitig die Kräfte an den Rotorblättern selbst durch eine mögliche Drehung des Rotors abgebaut werden können, so dass durch das erfindungsgemäße Verfahren die Windenergieanlage so eingestellt wird, dass sie den Kräften des Windes weitestmöglich ausweichen kann.

Weitere vorteilhafte Ausführungsformen der Erfindung sind durch die Unteransprüche gekennzeichnet. Im Folgenden wird ein Ausführungsbeispiel der Erfindung anhand der Figuren näher erläutert. Dabei zeigen:
- Figur 1: eine Windenergieanlage im normalen Betrieb,
- Figur 2: eine Windenergieanlage, welche durch das erfindungsgemäße Verfahren dach Erreichen einer ersten Windgeschwindigkeit eingestellt wurde; und
- Figur 3: eine Windenergieanlage, welche durch das erfindungsgemäße Verfahren bei Erreichen einer zweiten vorgegebenen Windgeschwindigkeit eingestellt wurde.

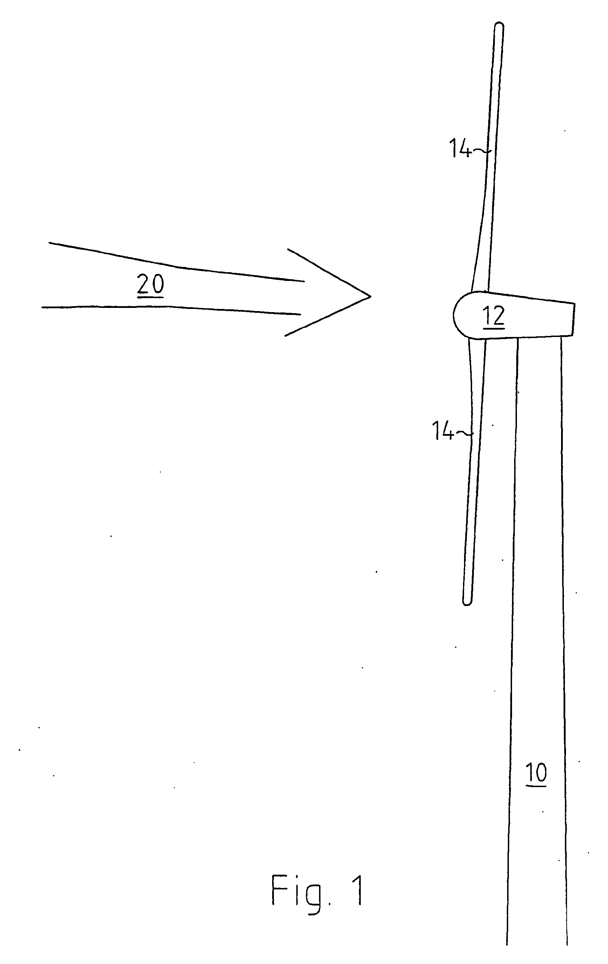

Figur 1 zeigt eine als Luv-Läufer ausgebildete Windenergieanlage - d. h., der Rotor befindet sich an der dem Wind zugewandten Seite des Turmes 10. An der Spitze des Turmes 10 befindet sich das Maschinenhaus 12 mit dem (nicht dargestellten) Generator und den Rotorblättern 14.

In dieser Figur ist diese beispielhafte Windenergieanlage im Normalbetrieb dargestellt und die Rotorblätter 14 sind so eingestellt, dass sie dem Wind, der durch einen Pfeil 20 angedeutet ist, die maximale Leistung zur Umwandlung in elektrische Energie entnehmen.

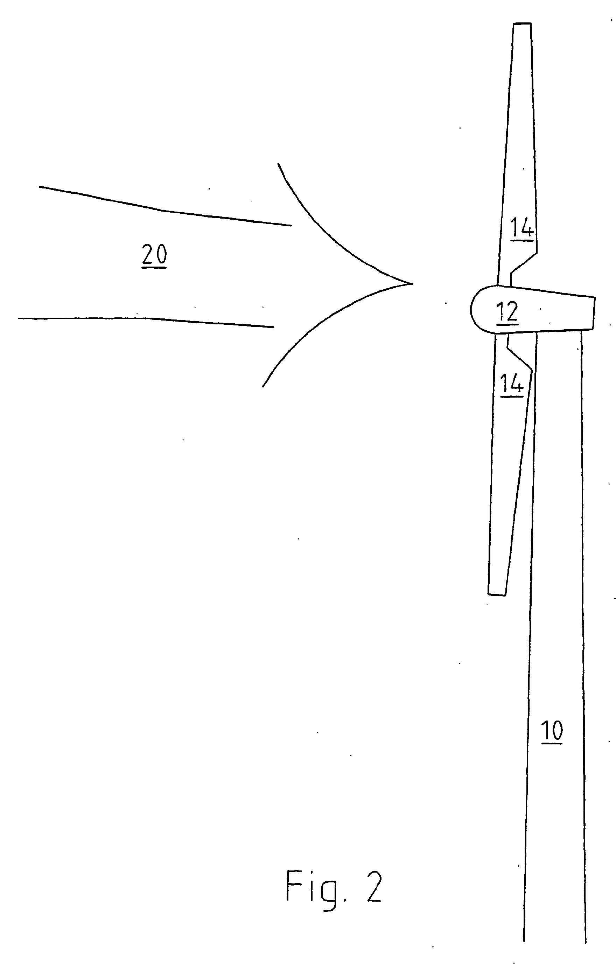

Figur 2 zeigt ebenfalls eine Windenergieanlage mit einem Turm 10, an dessen Spitze sich ein Maschinenhaus 12 befindet. In dieser Figur ist eine mögliche Einstellung der Rotorbläter 14 dargestellt, die durch die erfindungsgemäße Steuerung herbeigeführt wird, wenn eine erste vorgegebene Windgeschwindigkeit z. B. 20 m/s erreicht bzw. überschritten wird. Die Rotorblätter 14 werden dann in eine sogenannte Fahnenstellung gedreht, in welcher sie so ausgerichtet sind, dass sie den geringsten Windwiderstand aufweisen.

Auf diese Weise wird die Belastung, welche der anströmende Wind 20 über die Rotorblätter 14 auf die Windenergieanlage 8, 10, 12, 14 ausübt, deutlich verringert. Weiterhin liegt die Strömung in dieser Stellung natürlich nicht an den Rotorblättern 14 an, so dass auch die entsprechenden (Auftriebs-) Kräfte nicht entstehen. Daher ergibt sich keine Rotordrehung.

Bei Windenergieanlagen, bei welchen die Veränderung .des Anstellwinkels der Rotorblätter 14 nicht möglich ist, kann eine Reaktion der Steuerung entsprechend dem erfindungsgemäßen Verfahren darin bestehen, z. B. einen Teil des Rotorblattes, bevorzugt einen äußeren Teil, der weitestmöglich von der (nicht dargestellten) Rotomabe entfernt ist, derart zu verstellen, dass die Strömung an den Rotorblättern abreißt und somit die Rotation unterbunden wird.

Bei dieser Einstellung sind jedoch die auf die Rotorblätter 14, das Maschinenhaus 12 und den Turm 10 wirkenden Kräfte immer noch relativ groß und insbesondere die Azimutverstellung muss erheblichen Belastungen widerstehen.

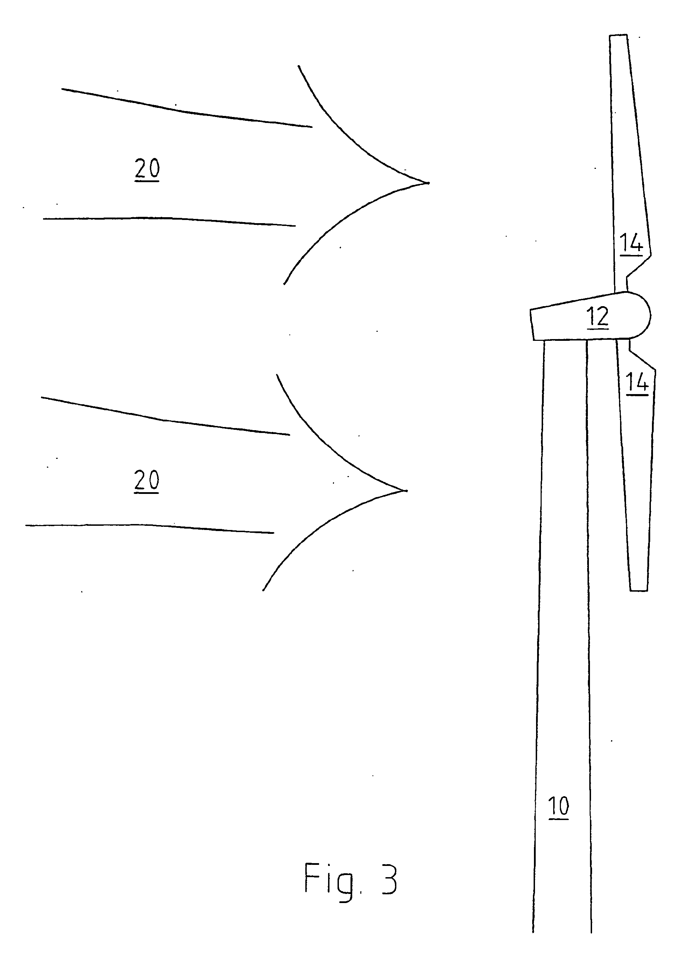

Um Beschädigungen zu vermeiden, verstellt das erfindungsgemäße Steuerungsverfahren daher die Azimutposition des Maschinenhauses 12 bei Erreichen einer zweiten, vorgegebenen Windgeschwindigkeit z.B. mehr als 30 m/s - 50 m/s derart, dass der Rotor sich in Lee, also an der windabgewandten Seite des Turmes 10 befindet. Dies ist in Figur 3 dargestellt. Die zweite vorgegebene Windgeschwindigkeit liegt in einer Größenordnung, wo von einem orkanartigen Sturm oder einem Hurrikan gesprochen werden kann. Bei solchen Windgeschwindigkeiten bewegt sich üblicherweise an bisher bekannten Windenergieanlagen nichts mehr, weil sowohl die Azimutbremse als auch die Rotorbremse für den völligen Stillstand der Anlage sorgen.

In Figur 3 ist das Maschinenhaus 12 an der Spitze des Turmes 10 so eingestellt, dass der Wind 20 zunächst am Turm 10 vorbeiströmt und dann erst den Rotor mit den Rotorblättern 14 erreicht. Durch Lösen der Azimutbremse und der Rotorbremse wird es bei dieser Einstellung möglich, dass die sich aus dem anströmenden Wind ergebenden und insbesondere auf die Rotorblätter 14 wirkenden Kräfte zu einer freien Drehung des Maschinenhauses 12 im Azimuttager führen können, so dass der Wind bei Richtungsänderungen das Maschinenhaus 12 "mitnimmt".

Wie in Figur 3 erkennbar ist, ist die Position der Rotorblätter 14 zum Wind hin unverändert geblieben, d. h. die Rotorblätter 14 befinden sich nach wie vor in der sogenannten Fahnenstellung, in welcher sie den geringsten Windwiderstand aufweisen.

Da jedoch das Maschinenhaus 12 der Windenergieanlage 10, 12, 14 aus der Luv-Position in die Lee-Position gedreht wurde, d. h., eine Drehung um 180° ausgeführt hat, werden auch die Rotorblätter 14 um 180° gedreht, damit sie ihre Position relativ zum Wind beibehalten können.

Dementsprechend muss die Rotorblatt-Lagerung und der Rotorblatt-Antrieb eine solche Drehung zulassen.

Dabei sind zur Veränderung der Position der Rotorblätter 14 zwei grundlegende Verfahren und natürlich jede beliebige Zwischenvariante möglich. Eine Möglichkeit besteht darin, zunächst die Azimutposition des Maschinenhauses 12 so zu verändern, dass sich der Rotor von Luv nach Lee bewegt, und die Position der Rotorblätter 14 während dieser Verstellung unverändert zu lassen. Dies führt jedoch dazu, dass die Rotorblätter 14 nach einer Drehung von ca. 90° mit ihrer gesamten Fläche quer zum Wind stehen und diesem somit die volle Angriffsfläche bieten. Hier kann ein Lösen der Rotorbremse auch nur bedingt Abhilfe schaffen, da wenigstens zwei Blätter, von denen sich eines oberhalb und das andere unterhalb der horizontalen Rotorachse befindet, vom Wind beaufschlagt werden.

Die bevorzugte Alternative besteht darin, die Position der Rotorblätter 14 relativ zum Wind durch eine kontinuierliche Veränderung der Position der Rotorblätter 14 relativ zum Wind durch eine kontinuierliche Veränderung der Position der Rotorblätter 14 gegenüber dem Maschinenhaus 12 (bei gleichbleibender Ausrichtung zum Wind) während der Verstellung der Azimutposition beizubehalten. Dadurch befinden sich die Rotorblätter 14 auch bei einer Position des Maschinenhauses 12 quer zur Windrichtung 20 in einer Fahnenstellung und bieten somit immer noch den geringstmöglichen Widerstand.

Die vorbeschriebene Erfindung ist insbesondere für Windenergieanlagen im Offshore-Bereich geeignet. Da gerade im Offshore-Bereich, also bei Windenergieanlagen an offener See zu erwarten ist, dass sie den stärksten Stürmen zum Teil ausgesetzt werden, gleichzeitig aber jedoch auch bei kleineren Schäden an den Anlagen wesentlich gleich repariert werden können, wird mittels der Erfindung Sorge dafür getragen, dass sich größere oder kleinere Schäden an den Anlagen teilen erst gar nicht einstellen können, weil durch die Verstellung der Rotorblätter in Fahnenposition und die Verstellung des Maschinenhauses in Lee-Position dafür gesorgt wird, dass die Windbelastung auf die gesamte Windenergieanlage und deren Teile (insbesondere Turm) so gering wie möglich ist.

## Patentansprüche

1. Verfahren zur Steuerung einer Windenergieanlage mit einem Maschinenhaus und mit einem Rotor mit wenigstens einem Rotorblatt, bei welchem die Rotorblätter der Windenergieanlage bei Erreichen einer ersten vorgegebenen Windgeschwindigkeit, insbesondere der Grenzgeschwindigkeit, welche größer als 20m/s ist in eine erste, vorgegebene Position gestellt werden, und bei Erreichen einer zweiten vorgegebenen Windgeschwindigkeit, die deutlich höher ist als die erste vorgegebene Windgeschwindigkeit, das Maschinenhaus (12) in eine vorgeschriebene Azimutposition gebracht wird,
**dadurch gekennzeichnet, dass** bei Bewegung des Maschinenhaus in die vorgegebene Azimutposition auch gleichzeitig die Rotorblätter so verstellt werden, dass sich ihre Position in Fahnestellung zu Hauptwindrichtung im Wesentlichen nicht verändert.

2. Verfahren nach Anspruch 1,
**dadurch gekennzeichnet, dass** die Rotorblätter (14) bei Erreichen der zweiten, vorgegebenen Windgeschwindigkeit in eine zweite, vorgegebene Einstellung gebracht werden.

3. Verfahren nach Anspruch 2,
**dadurch gekennzeichnet, dass** die Rotorblätter (14) in die zweite vorgegebene Einstellung gestellt werden, nachdem das Maschinenhaus (12) seine vorgegebene Einstellung erreicht.

4. Verfahren nach Anspruch 3, bei welchem die zweite vorgegebene Einstellung der Rotorblätter (14) während des vorgegebenen Einstellvorganges des Maschinenhauses (12) ausgeführt wird.

5. Verfahren nach einem der vorstehenden Ansprüche,
**dadurch gekennzeichnet, dass** an den Rotorblättern (14) mittels Lasterfassungsmittel die auf die Rotorblätter wirkenden Lasten erfasst werden.

6. Verfahren nach einem der vorstehenden Ansprüche,
**dadurch gekennzeichnet, dass** bei der Festlegung der Bewegungsrichtung für das Maschinenhaus (12) zur neuen Azimutposition die Verdrillung von Kabeln im Maschinenhaus berücksichtigt wird.

7. Verfahren nach einem der vorstehenden Ansprüche,
**dadurch gekennzeichnet, dass** insbesondere bei schnell wechselnden Windrichtungen eine mittlere Windrichtung ermittelt wird, und dass diese mittlere Windrichtung bei der Festlegung der Bewegungsrichtung des Maschinenhauses (12) berücksichtigt wird.

8. Verfahren nach einem der vorstehenden Ansprüche,
**dadurch gekennzeichnet, dass** bei mehreren die Bewegungsrichtung des Maschinenhauses (12) beeinflussenden Parametern eine Gewichtung der Parameter erfolgt.

9. Verfahren zur Steuerung einer Windenergieanlage nach einem der vorherigen Ansprüche,
**dadurch gekennzeichnet, dass** bei Erreichen der zweiten vorgegebenen Windgeschwindigkeit das Maschinenhaus in Lee-Position gebracht wird und sich die Rotorblätter in Fahnenstellung befinden.

10. Verfahren nach einem der vorherigen Ansprüche,
**dadurch gekennzeichnet, dass** die Azimutbremse bei Erreichen einer Geschwindigkeit oberhalb der ersten Geschwindigkeit, vorzugsweise bei Erreichen der zweiten Windgeschwindigkeit, gelöst wird.

11. Verfahren nach einem der vorstehenden Ansprüche,
**dadurch gekennzeichnet, dass** die Rotorbremse gelöst wird.

12. Windenergieanlage, insbesondere zur Ausführung des Verfahrens nach einem der vorstehenden Ansprüche, mit einem Azimutantrieb und einem Rotor mit wenigstens einem einzeln verstellbaren Rotorblatt,
**gekennzeichnet durch** eine Steuerungsvorrichtung, welche den Wert der Windgeschwindigkeit erfasst und abhängig von dem ermittelten Wert der Windgeschwindigkeit bei stillstehendem Rotor den Anstellwinkel des Rotorblatts oder der Rotorblätter (14) und gleichzeitig die Azimutposition des Maschinenhauses (12) so verändert, dass sich das Rotorblatt oder die Rotorblätter während des Verstellvorganges des Maschinenhauses in eine vorgegebene Azimutposition stets im Wesentlichen in Fahnenposition zur Hauptwindrichtung befindet oder befinden.

13. Windenergieanlage nach Anspruch 12.
**gekennzeichnet durch** wenigstens einen Mikroprozessor in der Steuerungsvorrichtung.

## Claims

1. A method for controlling a wind energy plant with a machine housing and with a rotor with at least one rotor blade, in which the rotor blades of the wind energy plant are placed in a first, predetermined position when a first predetermined wind velocity, in particular the limit velocity, greater than 20 m/s, is reached, and the machine housing (12) is brought into a prescribed azimuth position when a second predetermined wind velocity, which is considerably higher than the first predetermined wind velocity, is reached, **characterised in that** when the machine housing (12) is moved into the predetermined azimuth position, the rotor blades are also simultaneously adjusted so that their position in flag position is not substantially changed relative to the main wind direction.

2. The method according to Claim 1, **characterised in that** the rotor blades (14) are brought into a second predetermined setting when the second, predetermined wind velocity is reached.

3. The method according to Claim 2, **characterised in that** the rotor blades (14) are brought to the second predetermined setting after the machine housing (12) reaches its predetermined setting.

4. The method according to Claim 3, in which the second predetermined setting of the rotor blades (14) is carried out during the predetermined setting process of the machine housing (12).

5. The method according to any one of the preceding claims, **characterised in that** the loads acting on the rotor blades are recorded on the rotor blades (14) by means of load recording means.

6. The method according to any one of the preceding claims, **characterised in that** consideration is given to the transposition of cables in the machine housing when determining the direction of movement for the machine housing (12) to the azimuth position.

7. The method according to any one of the preceding claims, **characterised in that** an average wind direction is determined, particularly in the case of rapidly changing wind directions, and **in that** this average wind direction is considered when determining the direction of movement of the machine housing (12).

8. The method according to any one of the preceding claims, **characterised in that** the parameters are weighted where there are several parameters influencing the direction of movement of the machine housing (12).

9. A method for controlling a wind energy plant according to any one of the preceding claims, **characterised in that** the machine housing is brought to the lee position when the second predetermined wind velocity is reached, and the rotor blades are in the flag position.

10. The method according to any one of the preceding claims, **characterised in that** the azimuth brake is released when a velocity above the first velocity is reached, preferably when the second wind velocity is reached.

11. The method according to any one of the preceding claims, **characterised in that** the rotor brake is released.

12. A wind energy plant, in particular for implementing the method according to any one of the preceding claims, with an azimuth drive and a rotor with at least one individually adjustable rotor blade, **characterised by** a control device which records the value of the wind velocity and varies the blade angle of the rotor blade or rotor blades (14) and at the same time the azimuth position of the machine housing (12), depending on the value of the wind velocity determined when the rotor is stationary, so that the rotor blade or blades is or are always substantially in the flag position relative to the main wind direction during the process of adjusting the machine housing to a predetermined azimuth position.

13. The wind energy plant according to Claim 12,
**characterised by** at least one microprocessor in the control device.

## Revendications

1. Procédé de commande d'une éolienne avec une nacelle et un rotor avec au moins une pale de rotor, dans lequel les pales de rotor de l'éolienne en atteignant une première vitesse de vent donnée, en particulier la vitesse limite, laquelle est supérieure à 20 m/s, sont placées dans une première position donnée, et dans lequel la nacelle (12) en atteignant une deuxième vitesse de vent donnée, qui est nettement supérieure à la première vitesse de vent donnée, est amenée dans une position azimutale recommandée,
**caractérisé en ce que** lors du mouvement de la nacelle dans la position azimutale donnée, les pales de rotor sont réglées également en même temps de telle manière que leur position (placées en drapeau) ne change pas sensiblement par rapport à la direction de vent principale.

2. Procédé selon la revendication 1,
**caractérisé en ce que** les pales de rotor (14) sont amenées dans un deuxième réglage donné en atteignant la deuxième vitesse de vent donnée.

3. Procédé selon la revendication 2,
**caractérisé en ce que** les pales de rotor (14) sont réglées dans le deuxième réglage donné après que la nacelle (12) a atteint son réglage donné.

4. Procédé selon la revendication 3, dans lequel le deuxième réglage donné des pales de rotor (14) est réalisé pendant l'opération de réglage donnée de la nacelle (12).

5. Procédé selon l'une quelconque des revendications précédentes, **caractérisé en ce que** les charges agissant sur les pales de rotor sont enregistrées sur les pales de rotor (14) au moyen d'un dispositif de détection des charges.

6. Procédé selon l'une quelconque des revendications précédentes,
**caractérisé en ce que** lors de la détermination du sens du mouvement pour la nacelle (12) dans la nouvelle position azimutale, la transposition de câbles dans la nacelle est prise en compte.

7. Procédé selon l'une quelconque des revendications précédentes,
**caractérisé en ce que**, en particulier avec des directions de vent changeant rapidement, une direction de vent moyenne est évaluée, et **en ce que** cette direction de vent moyenne est prise en compte dans la détermination de la direction du mouvement de la nacelle (12).

8. Procédé selon l'une quelconque des revendications précédentes,
**caractérisé en ce qu'**avec plusieurs paramètres influant sur la direction de mouvement de la nacelle (12) il se produit une pondération des paramètres.

9. Procédé de commande d'une éolienne selon l'une quelconque des revendications précédentes,
**caractérisé en ce que**, en atteignant la deuxième vitesse de vent donnée, la nacelle est mise en position abritée du vent et les pales de rotor sont alors en position drapeau.

10. Procédé selon l'une quelconque des revendications précédentes,
**caractérisé en ce que** le frein azimutal est desserré en atteignant une vitesse au-dessus de la première vitesse, de préférence en atteignant la deuxième vitesse de vent.

11. Procédé selon l'une quelconque des revendications précédentes, **caractérisé en ce que** le frein de rotor est desserré.

12. Eolienne, en particulier pour la réalisation du procédé selon l'une quelconque des revendications précédentes, avec une commande azimutale et un rotor avec au moins une pale de rotor réglable individuellement,
**caractérisée par** un dispositif de commande qui enregistre la valeur de la vitesse du vent et modifie en fonction de la valeur communiquée de la vitesse du vent sur un rotor immobile, l'angle d'incidence de la pale de rotor ou des pales de rotor (14) et en même temps la position azimutale de la nacelle (12) de telle manière que la ou les pales de rotor se trouve(nt) dans une position azimutale donnée pendant l'opération de réglage de la nacelle, toujours sensiblement en drapeau par rapport à la direction principale de vent.

13. Eolienne selon la revendication 12,
**caractérisée par** au moins un microprocesseur dans le dispositif dé commande.
